# EUROPEAN PATENT SPECIFICATION

(11) **EP 3 017 007 B1**
(45) Date of publication and mention of the grant of the patent: **02.01.2019**
(21) Application number: 14820187.4
(22) Date of filing: 02.07.2014
(51) Int. Cl.: C09D 5/08

(54) **CORROSION RESISTANT COATINGS FOR METAL SURFACES**
KORROSIONSBESTÄNDIGE BESCHICHTUNGEN FÜR METALLOBERFLÄCHEN
REVÊTEMENTS RÉSISTANT À LA CORROSION POUR SURFACES MÉTALLIQUES

(30) Priority: 02.07.2013 US 201361842227 P
(43) Date of publication of application: 11.05.2016
(73) Proprietor: Surtreat Holding, LLC, Pittsburgh, PA 15219 (US); Shore Corp, Pittsburgh, PA 15219 (US)
(72) Inventor: KNELL, Timothy, McMurray, PA 15317 (US); WALDE, Robert, Haymarket, VA 20169 (US)
(74) Representative: Potter Clarkson LLP
(86) International application number: PCT/US2014/045268
(87) International publication number: WO 2015/003066

(56) References cited:
- EP-A2- 1 078 963
- WO-A1-2009/097562
- WO-A2-2006/110961
- US-A- 4 072 626
- US-A- 4 072 626
- US-A- 4 101 328
- US-A- 5 041 241

## Description

### FIELD OF THE INVENTION

The present invention relates to a corrosion resistant coating (e.g. paint) additive for metal surfaces. In particular, the invention relates to a paint comprising a compatible additive which contains a concentrated solution of a migratory vapor phase corrosion inhibitor. Also described herein are methods of preparing a corrosion resistant coating (e.g. paint) for metal surfaces containing the additive.

### BACKGROUND OF THE INVENTION

Corrosion is an electrochemical process which leads to the deterioration and eventual destruction of exposed metal surfaces. The presence of conducting electrolyte, moisture and oxygen to successfully complete the electrical circuit on the thermodynamically unstable metal surface are the main factors of a corrosion process.

One of the most efficient ways to thwart corrosion is to shield metal surfaces from the environment with protective coatings. These coatings are of great importance for numerous civilian and military uses, including use on ship hulls and topside exterior surfaces, car underbodies, offshore drilling decks, bridges and supports, various fuel, potable water, chemical and sewage tanks, numerous structural and building uses, etc.

Over the years, coatings based on alkyd, urethane, vinyl, acrylic and epoxy paints and other technologies have been developed, and often have included corrosion inhibitor pigments such as zinc, aluminum, zinc oxide, modified zinc oxide and calcium ion-exchanged amorphous silica gel. Using corrosion inhibitor pigments has several disadvantages. Some pigments contain metals that are toxic. Several, including metallic zinc, have high densities and settle. A number of pigments react with resins in the coating. Additional pigmentation also requires added wetting agents that may affect corrosion resistance. Furthermore, such solid corrosion inhibitors require direct application to and contact with the metal surface in order to perform effectively.

Migratory vapor phase corrosion inhibitors have also been developed as additives to coatings to improve the corrosion resistant effect of the coating. These corrosion inhibitors are organic compounds that protect metal surfaces by emitting vapor such as an amine-based compound. The nitrogen on the amine has two electrons that are attracted to the polar metal surface. The corrosion inhibitor migrates to the surface of the metal surface, and when at the surface the rest of the molecule is very hydrophobic and repels water to significantly retard corrosion.

US Patent No. 4,812,503 describes certain migratory vapor phase corrosion inhibitors, such as amine carboxylates formed by reacting a secondary amine such as dicyclohexylamine with a carboxylic acid, and has shown them to migrate through the paint film following application to a metal surface to form an additional coating where the corrosion inhibitor is in direct contact with the metal surface and further protects the same from corrosion. However, a drawback of the corrosion inhibitor systems described in US Patent No. 4,812,503 is that the inhibitor is generally dissolved in a hydrocarbon solvent, such as naphtha or mineral spirits, before mixing with the paint and only achieves a concentration of inhibitor in solution of around 5 to 10 weight percent (wt.%). As such, it is necessary to add a large amount of the inhibitor-containing solution to the paint in order to obtain a sufficient concentration of inhibitor in the paint for it to be effective as a metal corrosion inhibitor. Having to add such a large volume of solvent lowers the paint solids content and reduces the dry film coverage per coat to an unacceptable level.

WO 2006/110961 describes corrosion inhibiting materials obtained by a chemical reaction between a Mannich base and other suitable reactants. The Mannich bases are derived from hydroxyaromatic compounds, secondary amines or cyclic secondary amines and aldehydes. The other reactants include: organo-metallic compounds, metal oxides, carboxylic acids, inorganic acids, inorganic acid derivatives, alkyl halides, organosilanes and quarternary ammonium derivatives and metal derivatives.

WO 2009/097562 describes oxidized and maleated derivative compositions, such as chemically modified oxidized and maleated tall oil fatty acid compositions, which can be prepared and used in a variety of industrial applications, including as emulsifiers, corrosion inhibitors, concrete admixtures, and in reverse flotation mining applications.

EP 1078963 describes a composition that can be applied to a metallic surface to give a thin film with good tribological properties and temporary protection against corrosion. Aqueous composition for the treatment of metallic surfaces comprises an emulsion of at least 2% of a pre-gelatinized starch and at least 1% of a vegetable wax or oil, or a synthetic oil of equivalent chemical nature.

US 4072626 describes an amine salt comprised of the reaction of pelargonic acid and dicyclohexylamine. The amine salt, dicyclohexylammonium pelargonate, is useful for inhibiting metal corrosion. A polyphosphate may be used in conjunction with the amine salt to obtain a synergistic corrosion inhibiting effect when a saline environment is encountered by the metal to be protected.

### SUMMARY OF THE INVENTION

We have now found a solution product which can achieve concentrations of certain migratory vapor phase corrosion inhibitors in solution up to about 50 wt. %, and may therefore be used as an additive for compatible paints at significantly lower solution volumes than has been previously possible. The migratory vapor phase corrosion inhibitor is an amine carboxylate prepared from readily available secondary amines and carboxylic acids under standard condensation conditions and is hereinafter referred to as the "amine carboxylate VCI". The solvent is one that provides a concentration of amine carboxylate VCI from about 40 wt. % to about 50 wt. % and is compatible with paint solvents and thinners common in the paint industry.

The present invention also describes coatings prepared by blending the new amine carboxylate VCI solution with compatible paints, such as 2-part epoxy paints, and their protective effect on non-corroded and corroded metal surfaces, especially ferrous metal surfaces, using standardized tests.

### DETAILED DESCRIPTION OF THE INVENTION

The description is not to be taken in a limiting sense, but is made merely for the purpose of illustrating the general principles of the invention.

In a first aspect of the invention, we describe a solution suitable for use as part of a corrosion resistant coating for metal surfaces, comprising an amine carboxylate VCI in a solvent wherein the concentration of the amine carboxylate VCI in solution is from about 40 wt. % to about 50 wt. %, especially about 40 wt. %. Also described herein is wherein the concentration of the amino carboxylate in solution is from about 25 wt. % to about 50 wt. %.

As used herein, the amine carboxylate VCI is a corrosion inhibitor capable of forming a vapor that migrates through paint and other sufficiently porous surfaces, such as corroded metal, including rust, to form a protective barrier coating on the surface of the metal.

In one embodiment, the amine carboxylate VCI is a compound of the formula (I)

R¹CO₂NR²R³ (I)

in which R¹ is a straight or branched chain alkyl group containing 6 to 18 carbon atoms, and R² and R³ are each independently a straight or branched chain alkyl group containing 3 to 8 carbon atoms, or R² and R³ are each independently a C₅ to C₈ cycloalkyl ring optionally substituted by a straight or branched chain alkyl group containing 1 to 3 carbon atoms and/or optionally containing an oxygen atom (-O-) to replace one of the ring methylene groups (-CH₂-).

R¹ is, in particular, a straight chain alkyl group containing 8 to 14 carbon atoms, such as a C8, C10, C12 or C14 alkyl group, and is preferably a straight chain C12 alkyl group.

R² and R³ are, in particular, each independently a C₅ to C₈ cycloalkyl ring optionally substituted by methyl, and are each preferably cyclohexyl.

In a preferred embodiment, the amine carboxylate VCI is a compound of formula (I) in which R¹ is a straight chain alkyl group containing 8 to 14 carbon atoms, especially having 12 carbon atoms, and R² and R³ are both cyclohexyl.

It will be appreciated that, in solution, a compound of formula (I) may exist in the hydrated ionized form represented below as formula (la). It is to be understood that formula (I) herein is intended to embrace the corresponding hydrated compounds of formula (Ia):

R¹CO²-HN⁺HR²R³ (Ia)

Solvents suitable for use according to this invention, to dissolve the amine carboxylate VCI to produce the desired concentration, are moderately polar and include (i) alcohols of the formula R-OH where R is a straight or branched chain C₂ to C₅ alkyl group optionally substituted by hydroxyl or phenoxy or contains a carbonyl group or R is a group -(CH₂)₃O(CH₂)₃O(CH₂)₃CH₃ (ii) n-butyl acetate or (iii) para-chlorobenzotrifluoride.

In one embodiment, R is a C₂ to C₅ alkyl group such as ethyl, isopropyl or n-butyl. Preferably, R is n-butyl and the alcohol is therefore n-butanol.

In a particularly embodiment, the amine carboxylate VCI is a compound of formula (I), including a compound of formula (la), in which R¹ is straight chain C₁₂ alkyl and R² and R³ are both cyclohexyl. In a preferred embodiment, this amine carboxylate VCI is dissolved in n-butanol, especially at a concentration of from about 25 wt. % to about 50 wt. % (e.g. about 40 wt. %).

Paints or coatings of the epoxy, urethane, vinyl, alkyd and acrylic types when applied to clean metal surfaces in a manner where there are no defects in the coating may furnish a high level of protection of the metal from corrosion. However, if the coating suffers damage and the metal surface is exposed, corrosion may take place and the coating may delaminate from the surface. Similarly, if the metal is in a corrosion active state as the result of having been exposed to a corrosive environment, such as seawater, or has a metal alloy content that forms anodic zones, further corrosion may take place under a fully intact coating due to the corrosion action of the metal and will lead to blistering and failure of the coating.

We have surprisingly found that coatings blended with the amine carboxylate VCI solution of the present invention significantly enhance the ability of the coating to resist metal corrosion when applied to both clean metal surfaces and metal surfaces which are damaged and/or corroded. Indeed, and very surprisingly, the amine carboxylate VCI-containing coating still has a beneficial corrosion resistant effect when the damaged and/or corroded metal has been previously coated with a paint that does not contain a corrosion inhibitor.

Thus, in another embodiment, we provide a corrosion resistant coating for metal surfaces comprising a blend of the amine carboxylate VCI solution and a paint, wherein said paint includes an organic solvent that is compatible with the amine carboxylate VCI solvent.

The paint may be any which uses a solvent that is compatible with the solvent used to dissolve the amine carboxylate VCI. The term "compatible" means that the organic solvent is one which enables the paint and the amine carboxylate VCI to be blended to form a homogeneous mixture. Preferably, the paint solvent is the same solvent as that which is used to dissolve the amine carboxylate VCI.

The paint is preferably an epoxy paint, such as a 2-part polyamide epoxy paint Suitable examples include 2-part polyamide epoxy paints of the military specification class of MIL-DTL-24441.

Metals which may be protected by the amine carboxylate VCIs of this invention are those metals which are normally corroded by water vapor in the air. Included are ferrous metals such as cast iron, steel, ferrous alloys such as galvanized steel and galvanized iron, and the like. Non-ferrous metals may also be protected and include copper and aluminum. The amine carboxylate VCIs of the present invention are particularly effective when applied to ferrous metal surfaces such as steel surfaces.

In another embodiment, we provide a corrosion resistant coating for ferrous metal surfaces consisting essentially of a blend of the amine carboxylate VCI solution of this invention and a paint, wherein said paint includes an organic solvent that is compatible with the amine carboxylate VCI solvent.

The amine carboxylate VCI solution of this invention and the paint are preferably mixed in amounts that will, when coated onto the metal surface, achieve a concentration of amine carboxylate VCI solids equal to about 1 wt. % to about 5 wt. % of total coated dry film solids, and particularly about 2 wt. % to about 3 wt. %.

Described herein is a process for preparing a corrosion resistant coating for metal surfaces comprising:
a. reacting a carboxylic acid R¹CO₂H (in which R¹ is a straight or
   branched chain alkyl group containing 6 to 18 carbon atoms) with a solution of an amine R²R³NH (in which R² and R³ are each independently a straight or branched chain alkyl group containing 3 to 8 carbon atoms, or R² and R³ are each independently a C₅-C₈ cycloalkyl ring optionally substituted by a straight or branched chain alkyl group containing 1 to 3 carbon atoms and/or optionally containing an oxygen atom (-O-) to replace one of the ring methylene groups (-CH₂-)) in a solvent selected from (i) R-OH (wherein R is a straight or branched chain C₂ to C₅ alkyl group optionally substituted by hydroxyl or phenoxy or contains a carbonyl group or R is a group -(CH₂)₃O(CH₂)₃O(CH₂)₃CH₃) (ii) n-butyl acetate and (iii) para-chlorobenzotrifluoride), to provide a solution of a compound of formula (I)

   R¹CO₂NR²R³ (I) ;

   and
b. blending the formed amine carboxylate VCI solution with a paint, including blending with Part A and/or Part B of a 2-part paint when used;
followed by combining Part A and Part B of a 2-part paint when used.

Also described herein is a process for making an amine carboxylate VCI solution from a combination of one of a C-8, C-10, C-12 or C-14 carboxylic acid with an organic secondary amine such as dicyclohexylamine (DCA), by adding the starting materials in about equimolar amounts to the solvent in a total quantity to achieve about a 40 wt. % solution of the amine carboxylate VCI.

It is important when a 2-part epoxy coating is used for the amine carboxylate VCI solution to be compatible with at least Part A and/or Part B of the two part paint. Preferably, the solvent (or thinner) used in Part A and/or Part Bis the same solvent as that which is used as the amine carboxylate VCI solvent.

In certain embodiments, other types of corrosion inhibitors may be added to paint such as zinc and aluminum pigments and chromates. However, for these to perform they need to be in direct contact with the metal surface. A further advantage of amine carboxylate VCIs is that they can perform effectively as corrosion inhibitors without the coating containing the amine carboxylate VCI being in direct contact with the metal surface.

Thus, suitable additional agents which may enhance the overall performance of the paint containing the amine carboxylate VCI solution of the present invention include one or more of (a) pigments normally added to give body to the paint, provide a decorative effect and help protect the metal surface and the dry film coat from ultra violet rays, and colorants (b) inorganic corrosion inhibitors, including: chromates such as zinc chromate; nitrates such as ferric nitrate; phosphates such as polyphosphates and oxides thereof; molybdates such as zinc molybdates; borates such as zinc borates and so on (c) fungicides (d) dryers (e) mildewcides (f) ultra violet absorbers (g) anti-skimming agents etc.

### EXAMPLES

### (A) PREPARATION OF AMINE CARBOXYLATE VCI SOLUTIONS

Solutions of 4 types of amine carboxylate VCIs were made by separately reacting dicyclohexylamine (DCA) dissolved in n-butyl alcohol (NBA) with each of the following organic acids: octanoic acid (C-8), decanoic acid (C-10), dodecanoic acid (C-12) and tetradecanoic acid (C-14) in a 50/50 molar ratio to form a 40 wt. % solution of the product amine carboxylate VCI in NBA. DCA was added to NBA followed by the relevant organic acid with mixing to form a clear solution of the product amine carboxylate VCI. Table I records the weights of the ingredients used to make the 40 wt. % solutions of the amine carboxylate VCIs.

**Table 1**

| Example | Acid | Acid Weight (g) | DCA Weight (g) | NBA Weight (g) | VCI Weight % |
|---|---|---|---|---|---|
| 1 | Octanoic | 35.2 | 44.8 | 120 | 40 |
| 2 | Decanoic | 38.4 | 41.6 | 120 | 40 |
| 3 | Dodecanoic | 105.0 | 95.0 | 300 | 40 |
| 4 | Tetradecanoic | 111.4 | 88.6 | 300 | 40 |

40 wt. % solutions of the C-12 amine carboxylate VCI were similarly prepared in alternative solvents. Table 2 records the weights of the ingredients used to make the solutions.

**Table 2**

| Solvent | C-12 Acid Weight (g) | DCA Weight (g) | Solvent Weight (g) | VCI Weight % |
|---|---|---|---|---|
| Diacetone alcohol | 52.5 | 47.5 | 150 | 40 |
| Tert-Butyl acetate | 52.5 | 47.5 | 150 | 40 |
| Para-chlorobenzotrifluoride | 105.0 | 95.0 | 300 | 40 |

Other solvents, including ketones, naphtha and alternative acetates, were tested for their ability to dissolve amine carboxylate VCIs. However, these were found to be unacceptable. For example, when the concentration of the C-8 amine carboxylate VCI reached about 10% the solid amine carboxylate VCI precipitated out from these solutions.

### (B) PREPARATION OF COATINGS CONTAINING AMINE CARBOXYLATE VCIs

The 40 wt. % solutions of the amine carboxylate VCIs prepared in (A) above were each separately added to part A of a 2 part polyamide epoxy primer paint MIL-DTL-4441/20A, formula 150, Type III in a quantity to achieve a 2 to 3 wt. % of amine carboxylate VCI solids in the final dry film when the Parts A and B were combined and the paint was applied to a metal surface and allowed to dry and cure. Table 3 documents the amounts of each amine carboxylate VCI solution and the primer paint Part A that were used to make paint samples for coating steel test panels.

**Table 3**

| Amount of VCI solution | Amount of Epoxy Part A | Wt % VCI Solids |
|---|---|---|
| 4ml | 50ml | 2 |
| 5ml | 50ml | 2.5 |
| 6ml | 50ml | 3 |

The Part A primer was mixed with the amine carboxylate VCI solution at each of the above ratios and then separately combined with Part B in a 1:1 volume ratio to provide a volume of paint sufficient to feed an airless spray system for application of the primer paint to steel test panels.

### (C) PERFORMANCE TEST METHODS

The following processes use standard methodologies available from the American Section for Testing Materials known as ASTM. Details on these standards can be obtained from the ASTM web site www.ASTM.org. For example, ASTM D1654 is a Standard Test Method for the valuation of painted or coated specimens subject to corrosive environments. ASTM D610 describes the standard practice for evaluating the degree of rusting on painted steel surfaces. ASTM D3359 describes the Standard Test Method for measuring adhesion by a tape test. ASTM B117 describes the standard procedure for operating a salt spray (fog) apparatus. The apparatus consists of a closed chamber wherein a 5% salt solution is atomized onto test specimens via spray nozzles. The temperature is maintained at about 37°C and the volume of solution is about 400 liters. Performance is measured in terms of the number of hours of exposure.

Steel panels are X scribed on one side to facilitate measurement of the impact of corrosion on creep of the coating away from the X scribe area on a scale of 0 to 10 where 10 is no creep per ASTM D1654. The amount of corrosion on the non-scribed side is observed and measured on a scale of 0 to 10 where 10 is no observable rust per the method described in ASTM D610. The level of paint adhesion to the steel panels is measured in accordance with ASTM D3359 where a rating of 5B equals no loss of coating and 100% adhesion.

### D) PERFORMANCE RESULTS

The tests hereinafter were performed using a salt (fog) chamber. This is an accelerated exposure test designed to exaggerate the impact of corrosive damage caused by salt water, and to demonstrate the unique value of adding amine carboxylate VCI agents to coatings to protect steel already in a corrosion active state as well as protect fresh steel surfaces from corrosion. A 5% sodium chloride solution is misted on the test panels set at a 15 degree angle at 37°C (98°F) for the relevant period of time. The panels are removed, rinsed and rated for the degree of corrosion damage.

### Exhibits 1 and 2: Abraded white steel panels coated with epoxy primer containing the C-10 amine carboxylate VCI (Example 2 in Table 1) vs. a coated control

Five ASTM A1008 steel panels that had previously had the surface abraded by exposure to 80 grit black beauty per MIL 23331 were coated with the epoxy primer containing 2.5 wt.% amine carboxylate VCI equivalent of the C-10 amine carboxylate VCI (Exhibit 2 hereinafter) and were X scribed on one side. Five similar panels were coated with a control (Exhibit 1) using the same epoxy primer (without the amine carboxylate VCI) containing NBA in the same quantity as in Exhibit 2. The panels were allowed to dry and cure for seven day and were then X scribed on one side. Four of each set of panels were placed in the salt (fog) chamber and exposed for 500 hours. One panel from each set was used to measure the film adhesion level and thickness.

### Exhibits 3 to 6: Salt (fog) corroded abraded steel panels coated with epoxy primer containing the C-10 and C-12 amine carboxylate VCIs (Examples 2 and 3 of Table 1) vs. a coated control

Twenty black beauty abraded ASTM A1008 steel panels were first exposed to salt water in a salt (fog) chamber for 24 hours to cause surface corrosion and salt contamination. The panels were rinsed and loose rust was removed using an abrasive pad. Five of each panel were then either coated with the epoxy primer containing the C-10 and C-12 amine carboxylate VCIs (Exhibits 4 and 5 respectively hereinafter), or coated with the epoxy primer containing the C-10 amine carboxylate VCI followed by a top-coat of MIL-PRE-85285 (Exhibit 6 hereinafter), or coated with a control (Exhibit 3 hereinafter) using the same epoxy primer (without the amine carboxylate VCI) containing NBA in the same quantity as in Exhibits 4, 5 and 6. The panels were allowed to dry and cure for seven day and were then X scribed on one side. Four of each set of panels were placed in the salt (fog) chamber and exposed for 500 hours. One panel from each set was used to measure the film adhesion level and thickness.

### Exhibits 7 to 10: Salt (fog) corroded smooth steel panels coated with epoxy primer containing the C-8 and C-10 amine carboxylate VCIs (Examples 1 and 2 of Table 1) vs. a coated control

Twenty smooth steel panels were exposed in salt (fog) chamber for 24 hours to cause surface corrosion and salt contamination. The panels were rinsed and loose rust was removed using an abrasive pad. Five of each panel were then either coated with epoxy primer containing the C-8 amine carboxylate VCI added to achieve a 2.0 wt. % or 3.0 wt. % in the dry film (Exhibits 8 and 9 respectively hereinafter), or coated with the C-10 amine carboxylate VCI added to achieve a 2.0 wt.% in the dry film (Exhibit 10 hereinafter), or coated with a control (Exhibit 7 hereinafter) using the same epoxy primer (without the amine carboxylate VCI) containing NBA in the same quantity as in Exhibits 7, 8 and 9. The panels were allowed to dry and cure for seven day and were then X scribed on one side. Four of each set of panels were placed in the salt (fog) chamber and exposed for 500 hours. One panel from each set was used to measure the film adhesion level and thickness.

**Table 4**

| Exhibit No. | VCI type used | Wt % VCI Solids | No. of tests |
|---|---|---|---|
| 3 | None* | Not applicable | 5 |
| 4 | C-10 | 2.5 | 5 |
| 5 | C-12 | 2.5 | 5 |
| 6 | C-10** | 2.5 | 5 |
| 7 | None* | Not applicable | 5 |
| 8 | C-8 | 2.0 | 5 |
| 9 | C-8 | 3.0 | 5 |
| 10 | C-10 | 2.0 | 5 |

| | | | |
|---|---|---|---|
| * NBA added ** With a 2-part urethane top-coat MIL-PRE-85285 (an aliphatic polyurethane paint) | | | |

Table 5 presents the test results for all 10 of the test panel groups exposed to the salt (fog) chamber test. The numerical results shown are the averaged results from all of the test panel experiments. Although there may be some minor variation between individual results, the results individually and as averaged consistently show that addition of 2.5 wt. % and 3.0 wt. % of the amine carboxylate VCI reduced the degree of paint failure and steel corrosion as measured in terms of coating creep and formation of rust spots on the coated surface.

**Table 5**

| Exhibit No. | Dry Film thickness (ml) | Film adhesion | Film creep | Degree of rust |
|---|---|---|---|---|
| 1 | 2.4 | 5B | 5 | 4 |
| 2 | 2.4 | 4B | 6.5 | 9 |
| 3 | 2.3 | 2B | 3.5 | 3 |
| 4 | 3 | 5B | 6 | 7 |
| 5 | 2 | 5B | 6 | 9 |
| 6 | 3.5 | 4B | 6.5 | 9 |
| 7 | 4.2 | 2B | 6 | 7 |
| 8 | 4.3 | 4B | 6 | 10 |
| 9 | 4.3 | 3B | 7 | 10 |
| 10 | 4.5 | 4B | 9 | 10 |

Comparison of Exhibit 1 (control) and Exhibit 2 shows that the addition of 2.5wt% of C-10 type amine carboxylate VCI to the epoxy primer applied on black beauty abraded steel panels reduces the degree of creep from 5.0 to 6.5 and the level of observed corrosion on coating surface from 4 to 9.

Comparison of Exhibit 3 (control) and Exhibit 4 shows that addition of 2.5wt% of the C-10 amine carboxylate VCIs resulted in a significant reduction in the level of creep and rust spot formation. Creep scale level changed from 3.5 to 6, and the degree of observed corrosion changed from 3 to 7. Exhibit 5 demonstrates that the C-12 amine carboxylate VCI at 2.5 wt. % further improves corrosion resistance with the degree of observed corrosion changed to 9. These results establish the C-12 amine carboxylate VCI at 2.5 wt. % in the final dry paint film as preferred.

Exhibit 6 demonstrates how the addition of a 2 part urethane top-coat to the epoxy primer of Exhibit 4 slightly improves the creep level and significantly improves the observed corrosion level (from 7 to 9).

Comparison of Exhibit 7 (control) and Exhibit 8 shows that the C-8 amine carboxylate VCI, while not having a measurable impact on creep, did reduce the amount of observed corrosion on the coating surface. Exhibit 9 demonstrates an improvement in creep when the amount of C-8 amine carboxylate VCI is increased to 3 wt. %. The most significant results are the large reduction in the impact of creep and corrosion by the addition of 2.5 wt. % of the C-10 amine carboxylate VCI (Exhibit 10). Creep was reduced from a scale level of 6 to 9 and the observed formation of rust spots was reduced from 7 to 10.

It should be understood, of course, that the foregoing relates to exemplary embodiments of the invention and that modifications may be made without departing from the scope of the invention as set forth in the following claims.

## Claims

1. A highly concentrated solution suitable for use as part of a corrosion resistant coating for metal surfaces, comprising an amine carboxylate VCI in a solvent, wherein the concentration of the amine carboxylate VCI in solution is from about 40 wt. % to about 50 wt. %.

2. A solution according to Claim 1, wherein the amine carboxylate VCI is a compound of the formula (I)
R¹CO₂NR²R³ (I)
in which R¹ is a straight or branched chain alkyl group containing 6 to 18 carbon atoms, and R² and R³ are each independently a straight or branched chain alkyl group containing 3 to 8 carbon atoms, or R² and R³ are each independently a C₅₋₈ cycloalkyl ring optionally substituted by a straight or branched chain alkyl group containing 1 to 3 carbon atoms and/or optionally containing an oxygen atom (-O-) to replace one of the ring methylene groups (-CH₂-).

3. A solution according to Claim 2, wherein R¹ is a straight chain alkyl group containing 8 to 14 carbon atoms.

4. A solution according to Claim 2, wherein R¹ is a straight chain alkyl group containing 12 carbon atoms.

5. A solution according to Claim 2, wherein R¹ is a straight chain alkyl group containing 8 to 14 carbon atoms and R² and R³ are both cyclohexyl.

6. A solution according to any one of Claims 1 to 5 wherein the solvent is selected from (i) alcohols of the formula R-OH where R is a straight or branched chain C₂ to C₅ alkyl group optionally substituted by hydroxyl or phenoxy or contains a carbonyl group or R is a group -(CH₂)₃O(CH₂)₃O(CH₂)₃CH₃ (ii) n-butyl acetate or (iii) para-chlorobenzotrifluoride.

7. A solution according to Claim 6 wherein the said solvent is an alcohol of the formula R-OH where R is a straight or branched chain C₂ to C₅ alkyl group.

8. A solution according to Claim 7 wherein the said solvent is n-butanol.

9. A solution according to any one of Claims 1 to 8, wherein the amine carboxylate VCI is present at a concentration of about 40 wt%.

10. A corrosion resistant coating for metal surfaces comprising a blend of (i) the highly concentrated solution of any one of Claims 1 to 9 and (ii) a paint, wherein said paint includes an organic solvent that is compatible with the amine carboxylate VCI solvent.

11. A corrosion resistant coating according to Claim 10, wherein said paint includes the same solvent as the amine carboxylate VCI solvent.

12. A corrosion resistant coating according to Claim 10 or Claim 11 for clean or corroded ferrous metal surfaces.

13. A corrosion resistant coating according to Claim 10 or Claim 11 for corroded ferrous metal surfaces that have been previously coated with a paint, optionally wherein the paint did not contain a corrosion inhibitor.

14. A coating according to any one of Claims 10 to 13 which, on application to a metal surface, achieves a concentration of amine carboxylate VCI solids equal to about 1 wt. % to about 5 wt. % of total coated dry film solids.

15. A corroded metal surface coated with the corrosion resistant coating of any of Claims 10 to 14, wherein the coating dry film contains about 2 wt. % to about 5 wt. % of amine carboxylate VCI solids.

## Patentansprüche

1. Hochkonzentrierte Lösung, geeignet für die Verwendung als Teil einer korrosionsbeständigen Beschichtung, umfassend ein Amincarboxylat VCI in einem Lösungsmittel, wobei die Konzentration von Amincarboxylat VCI in Lösung etwa 40 Gew.-% bis etwa 50 Gew.-% beträgt.

2. Lösung nach Anspruch 1, wobei das Amincarboxylat VCI eine Verbindung der Formel (I)
R¹CO₂NR²R³ (I)
ist, wobei R¹ eine geradkettige oder eine verzweigtkettige Alkylgruppe ist, die 6 bis 18 Kohlenstoffatome enthält, und R² und R³ jeweils unabhängig eine geradkettige oder eine verzweigtkettige Alkylgruppe sind, die 3 bis 8 Kohlenstoffatome enthalten, oder R² und R³ jeweils unabhängig ein C₅₋₈-Cycloalkylring sind, optional ersetzt durch eine geradkettige oder verzweigtkettige Alkylgruppe, die 1 bis 3 Kohlenstoffatome enthält, und/oder optional ein Sauerstoffatom (-O-) zum Ersetzen einer der Ringmethylengruppen (-CH₂-) enthält.

3. Lösung nach Anspruch 2, wobei R¹ eine geradkettige Alkylgruppe ist, die 8 bis 14 Kohlenstoffatome enthält.

4. Lösung nach Anspruch 2, wobei R¹ eine geradkettige Alkylgruppe ist, die 12 Kohlenstoffatome enthält.

5. Lösung nach Anspruch 2, wobei R¹ eine geradkettige Alkylgruppe ist, die 8 bis 14 Kohlenstoffatome enthält, und R² und R³ beide Cyclohexyl sind.

6. Lösung nach einem der Ansprüche 1 bis 5, wobei das Lösungsmittel ausgewählt ist aus (i) Alkoholen der Formel R-OH, wobei R eine geradkettige oder eine verzweigtkettige C₂- bis C₅-Alkylgruppe ist, optional ersetzt durch Hydroxyl oder Phenoxy, oder sie enthält eine Carbonylgruppe, oder R ist eine Gruppe -(CH₂)₃O(CH₂)₃O(CH₂)₃CH₃ (ii) n-Butylacetat oder (iii) Parachlorbenzotrifluorid.

7. Lösung nach Anspruch 6, wobei das Lösungsmittel ein Alkohol der Formel R-OH ist, wobei R eine geradkettige oder verzweigtkettige C₂- bis C₅-Alkylgruppe ist.

8. Lösung nach Anspruch 7, wobei das Lösungsmittel n-Butanol ist.

9. Lösung nach einem der Ansprüche 1 bis 8, wobei das Amincarboxylat VCI in einer Konzentration von etwa 40 Gew.-% vorliegt.

10. Korrosionsbeständige Beschichtung für Metalloberflächen, umfassend eine Mischung aus (i) der hochkonzentrierten Lösung nach einem der Ansprüche 1 bis 9 und (ii) einer Farbe, wobei die Farbe ein organisches Lösungsmittel einschließt, das mit dem Amincarboxylat-VCI-Lösungsmittel kompatibel ist.

11. Korrosionsbeständige Beschichtung nach Anspruch 10, wobei die Farbe dasselbe Lösungsmittel wie das Amincarboxylat-VCI-Lösungsmittel einschließt.

12. Korrosionsbeständige Beschichtung nach Anspruch 10 oder 11 für reine oder korrodierte Eisenmetalloberflächen.

13. Korrosionsbeständige Beschichtung nach Anspruch 10 oder 11 für korrodierte Eisenmetalloberflächen, die zuvor mit einer Farbe beschichtet wurden, optional wobei die Farbe keinen Korrosionsinhibitor enthielt.

14. Beschichtung nach einem der Ansprüche 10 bis 13, die bei dem Anwenden auf einer Metalloberfläche eine Konzentration von Amincarboxylat-VCI-Feststoffen gleich etwa 1 Gew.-% bis etwa 5 Gew.-% der gesamten beschichteten Trockenfilmfeststoffe erreicht.

15. Korrodierte Metalloberfläche, die mit der korrosionsbeständigen Beschichtung nach einem der Ansprüche 10 bis 14 beschichtet ist, wobei der Beschichtungstrockenfilm etwa 2 Gew.-% bis etwa 5 Gew.-% von Amincarboxylat-VCI-Feststoffen enthält.

## Revendications

1. Solution hautement concentrée convenant pour être utilisée comme partie d'un revêtement résistant à la corrosion pour des surfaces en métal, comprenant un inhibiteur de corrosion en phase vapeur (ICV) carboxylate d'amine dans un solvant, dans laquelle la concentration de l'ICV carboxylate d'amine en solution est d'environ 40 % en poids à environ 50 % en poids.

2. Solution selon la revendication 1, dans laquelle l'ICV carboxylate d'amine est un composé de formule (I)
R¹CO₂NR²R³ (I)
dans laquelle R¹ est un groupe alkyle à chaîne droite ou ramifiée contenant 6 à 18 atomes de carbone, et R² et R³ sont chacun indépendamment un groupe alkyle à chaîne droite ou ramifiée contenant 3 à 8 atomes de carbone, ou R² et R³ sont chacun indépendamment un cycloalkyle en C₅ à C₈ substitué par un groupe alkyle à chaîne droite ou ramifiée contenant 1 à 3 atomes de carbone et/ou facultativement contenant un atome d'oxygène (-O-) pour remplacer l'un des groupes méthylène (-CH₂-) de cycle.

3. Solution selon la revendication 2, dans laquelle R¹ est un groupe alkyle à chaîne droite contenant 8 à 14 atomes de carbone.

4. Solution selon la revendication 2, dans laquelle R¹ est un groupe alkyle à chaîne droite contenant 12 atomes de carbone.

5. Solution selon la revendication 2, dans laquelle R¹ est un groupe alkyle à chaîne droite contenant 8 à 14 atomes de carbone et R² et R³ sont tous deux un cyclohexyle.

6. Solution selon l'une quelconque des revendications 1 à 5, dans laquelle le solvant est choisi parmi (i) des alcools de formule R-OH où R est un groupe alkyle en C₂ à C₅ à chaîne droite ou ramifiée facultativement substitué par hydroxyle ou phénoxy ou contient un groupe carbonyle ou R est un groupe -(CH₂)₃O(CH₂)₃O(CH₂)₃CH₃ (ii) de l'acétate de n-butyle ou (iii) du para-chlorobenzotrifluorure.

7. Solution selon la revendication 6, dans laquelle ledit solvant est un alcool de formule R-OH où R est un groupe alkyle en C₂ à C₅ à chaîne droite ou ramifiée.

8. Solution selon la revendication 7, dans laquelle ledit solvant est le n-butanol.

9. Solution selon l'une quelconque des revendications 1 à 8, dans laquelle l'ICV carboxylate d'amine est présent à une concentration d'environ 40 % en poids.

10. Revêtement résistant à la corrosion pour des surfaces en métal comprenant un mélange de (i) la solution hautement concentrée de l'une quelconque des revendications 1 à 9 et (ii) une peinture, dans lequel ladite peinture inclut un solvant organique qui est compatible avec le solvant de l'ICV carboxylate d'amine.

11. Revêtement résistant à la corrosion selon la revendication 10, dans lequel ladite peinture inclut le même solvant que le solvant de l'ICV carboxylate d'amine.

12. Revêtement résistant à la corrosion selon la revendication 10 ou la revendication 11, pour des surfaces en métal ferreux corrodées ou propres.

13. Revêtement résistant à la corrosion selon la revendication 10 ou la revendication 11, pour des surfaces en métal ferreux corrodées qui ont été préalablement revêtues d'une peinture, facultativement dans lequel la peinture ne contenait pas d'inhibiteur de corrosion.

14. Revêtement selon l'une quelconque des revendications 10 à 13 qui, lors de l'application à une surface en métal, parvient à une concentration en matières sèches de l'ICV carboxylate d'amine égale à environ 1 % en poids à environ 5 % en poids de la matière sèche de film revêtu totale.

15. Surface en métal corrodée revêtue du revêtement résistant à la corrosion de l'une quelconque des revendications 10 à 14, dans laquelle le film sec de revêtement contient environ 2 % en poids à environ 5 % en poids de matières sèches d'ICV carboxylate d'amine.
